# EUROPEAN PATENT SPECIFICATION

(11) **EP 2 535 363 B1**
(45) Date of publication and mention of the grant of the patent: **18.06.2014**
(21) Application number: 12169195.0
(22) Date of filing: 24.05.2012
(51) Int. Cl.: C08G 18/12, C08G 18/22, C08G 18/48, C08G 18/73, C08G 18/75, C09D 7/00, C09D 133/00

(54) **Hydrophobically modified alkylene oxide urethane polymer with improved viscosity profile**
Hydrophob modifiziertes Alkylenoxid-Urethan-Polymer mit verbessertem Viskositätsprofil
Polymère d'uréthane d'oxyde d'alkylène modifié hydrophobiquement avec un profil de viscosité amélioré

(30) Priority: 17.06.2011 US 201161498135 P
(43) Date of publication of application: 19.12.2012
(73) Proprietor: Rohm and Haas Company, Philadelphia, Pennsylvania 19106-2399 (US)
(72) Inventor: Li, Ling, Philadelphia, PA 19106-2399 (US); Bobsein, Barrett, Sellersville, PA Pennsylvania 18960 (US)
(74) Representative: Buckley, Guy Julian

(56) References cited:
- US-A- 4 155 892
- US-A- 5 753 731
- US-A1- 2006 106 153

## Description

### Background of the Invention

The present invention relates to hydrophobically modified urethane polymers, which are used as rheology modifiers in waterborne coatings formulations.

Rheology modifiers are used in waterborne coatings formulations to control viscosity over a wide shear rate range. They may be associative (they associate with the dispersed phase) or non-associative (they thicken the water phase). Associative thickeners may be derived from natural products such as hydrophobically modified cellulose ethers, or prepared from synthetic polymers such as hydrophobically modified ethylene oxide urethane (HEUR) polymers. U.S. 4,155,892 (Emmons et al.) describes the preparation of linear as well as branched HEUR polymers in separate examples.

Rheology modifiers are typically classified as either low shear rate viscosity builders (Stormer viscosity builders, also known as KU viscosity builders) or high shear rate viscosity builders (ICI builders). It is desirable to increase ICI viscosity and the efficiency of ICI building rheology modifiers without concomitant increase in KU viscosity because an increase in KU viscosity limits the formulator's ability to add a KU building rheology modifier to the formulation. A formulation with insufficient KU building rheology modifier added can exhibit poor resistance to sagging and dripping when applied to the substrate.

### Summary of the Invention

The present invention addresses a need in the art by providing in a first aspect a process comprising contacting together under reaction conditions: a) a polyalkylene glycol having a weight average molecular weight in the range of from 4000-12000 Daltons; an aliphatic diisocyanate; and an alkoxylated polyol having 50 to 250 repeating alkylene oxide units to form an intermediate polymer containing residual NCO groups; then b) reacting the intermediate polymer with a capping agent which is a linear, branched, or cyclic C₆-C₁₄ alkanol or C₁₀-C₁₆-(OX)ₙ-OH alkoxylated alcohol to form a hydrophobically modified alkylene oxide urethane polymer; wherein each X is independently CH₂CH₂ or CH₂CH(CH₃); n is 1 to 50; the OH group mole equivalent ratio of the polyalkylene glycol to the alkoxylated polyol in step a) is in the range of 3:1 to 12:1; the NCO to OH mole equivalent ratio in step a) is in the range of 1:0.70 to 1:0.95; the capping agent is added at or above a stoichiometric amount with respect to the residual NCO groups from step a); and the alkoxylated polyol is an alkoxylated triol or tetraol or a combination thereof.

In a second aspect, the present invention is a hydrophobically modified alkylene oxide urethane polymer comprising structural units of: a) a polyalkylene glycol having a weight average molecular weight in the range of from 4000-12000 Daltons; b) an aliphatic diiscocyanate; c) an alkoxylated polyol having 50 to 250 repeating alkylene oxide units; and d) a capping agent which is a linear, branched, or cyclic C₆-C₁₄ alkanol or C₁₀-C₁₆-(OX)ₙ-OH alkoxylated alcohol; wherein each X is independently CH₂CH₂ or CH₂CH(CH₃) ; n is 1 to 50; the OH group mole equivalent ratio of structural units of the polyalkylene glycol to the alkoxylated polyol is in the range of 3:1 to 12:1; the OH group mole equivalent of structural units of the capping agent to the alkoxylated polyol is in the range of 0.4 to 6.5, and the alkoxylated polyol is an alkoxylated triol or tetraol.

### Detailed Description of the Invention

In a first aspect, the present invention is a process comprising contacting together under reaction conditions: a) a polyalkylene glycol having a weight average molecular weight in the range of from 4000-12000 Daltons; an aliphatic diisocyanate; and an alkoxylated polyol having 50 to 250 repeating alkylene oxide units to form an intermediate polymer containing residual NCO groups; then b) reacting the intermediate polymer with a capping agent which is a linear, branched, or cyclic C₆-C₁₄ alkanol or C₁₀-C₁₆-(OX)ₙ-OH alkoxylated alcohol to form a hydrophobically modified alkylene oxide urethane polymer; wherein each X is independently CH₂CH₂ or CH₂CH(CH₃); n is 1 to 50; the OH group mole equivalent ratio of the polyalkylene glycol to the alkoxylated polyol in step a) is in the range of 3:1 to 12:1; the NCO to OH mole equivalent ratio in step a) is in the range of 1:0.70 to 1:0.95; the capping agent is added at or above a stoichiometric amount with respect to the residual NCO groups from step a); and the alkoxylated polyol is an alkoxylated triol or tetraol or a combination thereof.

As used herein, the term "polyalkylene glycol" refers to polyethylene glycol, polyethylene glycol/polypropylene glycol copolymers, or polyethylene glycol/polybutylene glycol copolymers. Preferably, the polyalkylene glycol is a polyethylene glycol, more preferably a polyethylene glycol having a weight average molecular weight (M_{w}) in the range of from 5000 to 9000 Daltons. CARBOWAX™ 8000 Polyethylene Glycol (A Trademark of The Dow Chemical Company or its Affiliates) is an example of a commercially available polyethylene glycol.

The aliphatic diisocyanate may be saturated or partially saturated, and may be linear, branched, or cyclic, or a combination thereof. Examples of suitable diisocyanates include 1,4-tetramethylene diisocyanate, 1,6-hexamethylene diisocyanate, 2,2,4-trimethyl-1,6-diisocyanatohexane, 1,10-decamethylene diisocyanate, 4,4'-methylenebis(isocyanatocyclohexane), 1,4-cyclohexylene diisocyanate, isophorone diisocyanate, and 1,5-tetrahydronaphthylene diisocyanate. Preferred diisocyanates include 1,6-hexamethylene diisocyanate, isophorone diisocyanate, and 4,4'-methylenebis(isocyanatocyclohexane).

The alkoxylated polyol is preferably an ethoxylated triol having the following general formula: 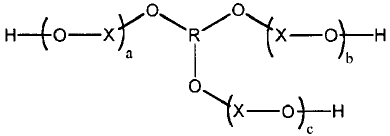
wherein R is a C₃-C₁₂ alkyl group which is linear or branched or cyclic or a combination thereof;
each X is independently CH₂CH₂ or CH₂CH(CH₃);
the sum a + b + c is in the range of from 50 to 250; preferably from 60 to 220; more preferably from 90 to 200; and most preferably from 120 to 180.

Examples of RO₃ groups are illustrated: 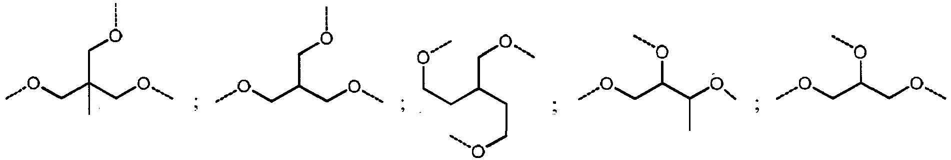 where the dotted lines represent the point of attachment to the X groups. Preferably, RO₃ is

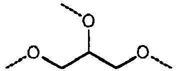

As used herein, the term "OH group mole equivalent," as it relates to the process, is illustrated by the following example: One molecule of polyethylene glycol has two OH groups while an ethoxylated triol has three OH groups. Thus, three moles of the glycol have the same number of OH groups as two moles of the triol and a ratio of the glycol to the triol in OH equivalents of 3:1 is the same as a mole:mole ratio of 9:2. Preferably, the OH group mole equivalent ratio of the polyalkylene glycol, preferably the polyethylene glycol, to ethoxylated polyol, preferably the ethoxylated triol, is in the range of from 4:1 to 7:1.

Similarly, the mole group equivalent ratio is calculated for diisocyanates and the sum of the polyalkylene glycol and the alkoxylated polyol. The preferred NCO:OH mole equivalent ratio in step a) is 1:0.80 to 1:0.90.

In a second step, the capping agent is added to the intermediate polymer to form the hydrophobically modified alkylene oxide urethane polymer, preferably the hydrophobically modified ethylene oxide urethane polymer. Preferably, the capping reagent is added in stoichiometric excess with respect to NCO groups to ensure substantially complete conversion of the NCO groups. Preferably, the capping agent is a linear, branched, or cyclic C₆-C₁₄ alkanol, examples of which include n-hexanol, cyclohexanol, n-octanol, n-nonanol, n-decanol, and n-dodecanol. Where the capping agent is a linear, branched, or cyclic C₁₀-C₁₆-(OX)ₙ-OH alkoxylated alcohol, X preferably is CH₂CH₂ and n is preferably 10 to 30.

In a second aspect, the present invention is a hydrophobically modified alkylene oxide urethane polymer comprising structural units of: a) a polyalkylene glycol having a weight average molecular weight in the range of from 4000-12000 Daltons; b) an aliphatic diisocyanate; c) an alkoxylated polyol having 50 to 250 repeating alkylene oxide units; and d) a capping agent which is a linear, branched, or cyclic C₆-C₁₄ alkanol or C₁₀-C₁₆-(OX)ₙ-OH alkoxylated alcohol; wherein each X is independently CH₂CH₂ or CH₂CH(CH₃), preferably CH₂CH₂; n is 1 to 50, preferably 10 to 30; the OH group mole equivalent ratio of structural units of the polyalkylene glycol to the alkoxylated polyol is in the range of 3:1 to 12:1; and the OH group mole equivalent ratio of structural units of the capping agent to the alkoxylated polyol is in the range of 0.4 to 6.5, and wherein the alkoxylated polyol is an alkoxylated triol or tetraol.

Preferably, the OH group mole mole equivalent ratio of structural units of the polyalkylene glycol to the alkoxylated polyol is in the range of 4:1 to 7:1; and preferably, the OH group mole equivalent ratio of structural units of the capping agent to the alkoxylated polyol is in the range of 0.6 to 2.0.

As used herein, the term "structural units" is used to refer to the repeating groups that are formed in the polymer by reaction of the materials. Thus, a structural unit of diisocyanate OCN-R'-NCO is as follows: 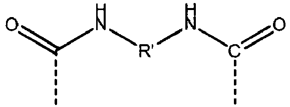 where R' is an linear, branched or cyclic aliphatic group.

The term "OH group mole equivalent ratio," as it relates to the composition of the present invention, refers to the structural units of the glycol, the alkoxylated polyol, or the capping agent in the polymer. Thus, for example, a structural unit of glycerin has three OH group mole equivalents while a structural unit of n-decanol has one OH group mole equivalents.

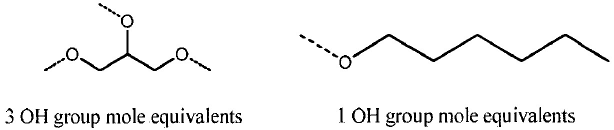

The coating composition according to the present invention may further include one or more of the following additives: Solvents; fillers; pigments, such as titanium dioxide, mica, calcium carbonate, silica, zinc oxide, milled glass, aluminum trihydrate, talc, antimony trioxide, fly ash, and clay; polymer encapsulated pigments, such as polymer-encapsulated or partially encapsulated opacifying pigment particles including titanium dioxide, zinc oxide, or lithopone polymers; polymers or polymer emulsions adsorbing or bonding to the surface of pigments such as titanium dioxide; hollow pigments, including pigments having one or more voids; dispersants, such as aminoalcohols and polycarboxylates; surfactants; defoamers; preservatives, such as biocides, mildewcides, fungicides, algaecides, and combinations thereof; flow agents; leveling agents; and additional neutralizing agents, such as hydroxides, amines, ammonia, and carbonates.

For example, the coatings composition may include polymer-encapsulated opacifying pigment particles comprising i) opacifying pigment particles, such as titanium dioxide particles, having a diameter in the range of 100 nm to 500 nm and an index of refraction of at least 1.8; ii) an encapsulating polymer, and iii) a polymeric dispersant for the encapsulated opacifying pigment particles and the polymer. Such polymer-encapsulated opacifying pigment particles are described, for example, in U.S. Patent Publication US 2010/0298483 A1. In another example, the coating composition may include polymer-encapsulated opacifying pigment particles as described in WO 2007/112503A1.

### Examples

The following examples are for illustrative purposes only and are not intended to limit the scope of the invention.

Comparative Examples 1 and 2 and Examples 1-5 are all illustrative of HEURs prepared using 1,6-hexamethylene diisocyanate (HDI), a polyethylene glycol (PEG) with M_{w} = 8200, and n-decanol as a capping reagent. The triol ethylene oxide (EO) length was varied from 0 to 200 EO units.

The ratios in each of the following examples and comparative examples was 0.75 PEG/ 0.15 triol/ 1.1 diisocyanate// 0.25 capping agent based on OH and NCO group equivalents.

### Comparative Example 1 - HEUR from Triol with No EO units

A mixture of CARBOWAX™ 8000 Polyethylene Glycol (150.0 g M_{w} = 8200, 18.29 mmol, 36.58 OH mmol equivalents), 1,1,1-tris(hydroxymethyl)propane (0.33 g, 2.46 mmol, 7.39 OH mmol equivalents), and toluene (400.0 g) was dried by azeotropic distillation for 2 h. The mixture was cooled to 90 °C, whereupon HDI (4.51 g, 26.84 mmol, 52.69 NCO mmol equivalents) and bismuth octoate solution (0.16 g, 28% by weight) were added with stirring. After 1 h, *n*-decanol (1.93 g, 12.2 mmol) was added and the mixture was maintained at 80 °C for another 1 h. Toluene was removed *in vacuo* and the resulting solid polymer was isolated.

The procedure for Comparative Example 2 and Examples 1-5 was substantially the same as that for Comparative Example 1, the difference being the nature of the triol. Table 1 illustrates the triols used and their corresponding molecular weights and further illustrates the effect on ICI and ICI/KU viscosity ratios on EO length. 1,1,1- THMP refers to 1,1,1-tris(hydroxymethyl)propane.

### Thickener Performance:

The performance obtained by the use of associative thickeners was demonstrated in a latex paint composition. A latex paint composition, Pre-paint #1, was prepared by combining the following components in the order listed:

| | |
|---|---|
| Ti-Pure R-746 TiO₂ | 349.8 g |
| TAMOL™ 731A Scale Inhibitor | 7.5 g |
| Byk 348 surfactant | 1.0 g |
| Tego Foamex 810 defoamer | 0.5 g |
| water | 20.9 g |
| RHOPLEX™ VSR-2015 Binder | 524.2 g |
| Byk 348 surfactant | 1.0 g |
| Tego Foamex 810 defoamer | 0.5 g |
| **Total** | **905.4 g** |

RHOPLEX™ VSR-2015 Binder was made using VERSAIR™ Technology (TAMOL™, RHOPLEX™, and VERSAIR are all Trademarks of The Dow Chemcial Company or its Affiliates.) The formulated paint was obtained by slowly adding with stirring thickener and water (combined weight 158.9 g) to Pre-paint #1 (905.4 g). Stirring was continued for 10 min. The density of the fully formulated paint was 1064 lb/100 gal (1.3 Kg/L). The pH values of the fully formulated paints were in the range of 8.5 to 9.0.

In the following data, thickener concentrations in the paint are described in terms of dry grams of thickener added even though the aqueous thickener composition was admixed into the paint. For example, 5 grams (dry) of a thickener can be obtained in the paint by adding 25 grams of 20 % active solids thickener solution. Following a 24-hour equilibration at room temperature, the thickened paint was stirred for one minute on a lab mixer before measuring viscosity values.

KU viscosity is a measure of the mid-shear viscosity as measured by a Krebs viscometer. The Krebs viscometer is a rotating paddle viscometer that is compliant with ASTM-D562. KU viscosity was measured on a Brookfield Krebs Unit Viscometer KU-1+ available from Brookfield Engineering Labs (Middleboro, MA, USA). KU refers to Krebs unit.

ICI viscosity is the viscosity, expressed in units of Pascal seconds (poise), measured on a high shear rate, cone and plate viscometer known as an ICI viscometer, which is described in ASTM D4287. The viscometer measures the viscosity of a paint at approximately 10,000 sec⁻¹. ICI viscosities of paints were measured on a viscometer manufactured by Research Equipment London, Ltd (London, UK). An equivalent ICI viscometer is the Elcometer 2205 manufactured by Elcometer, Incorporated (Rochester Hills, MI, USA). The ICI viscosity of a paint typically correlates with the amount of drag force experienced during brush application of the paint.

**Table 1 - Effect of Triol EO on ICI Viscosity and ICI/KU**

| Example | Triol | Triol EO units | Triol M_{w} | ICI | 100*ICI/KU |
|---|---|---|---|---|---|
| Comp. 1 | 1,1,1- THMP | 0 | 134 | 0.145 (1.45) | 0.163 (1.63) |
| Comp. 2 | Poe(26) Glycerin | 26 | 1236 | 0.15 (1.50) | 0.17 (1.70) |
| 1 | Poe(60) Glycerin | 60 | 2684 | 0.17(1.70) | 0.175 (1.75) |
| 2 | Poe(90) Glycerin | 90 | 3960 | 0.18 (1.80) | 0.184 (1.84) |
| 3 | Poe(120) Glycerin | 120 | 5259 | 0.19 (1.90) | 0.19 (1.90) |
| 4 | Poe(150) Glycerin | 150 | 7012 | 0.2 (2.00) | 0.2 (2.00) |
| 5 | Poe(200) Glycerin | 200 | 8631 | 0.2 (2.00) | 0.2 (2.00) |

Table 1 illustrates the surprising effect of Triol EO length on ICI viscosity and ICI/KU: As the data show, ICI values advantageously rise without a corresponding increase in KU viscosity.

For Comparative Example 3 and Example 6 *n*-nonanol was used as the capping agent. Poe(26) glycerine was used as the triol for the Comparative Example 3 and Poe(200) glycerine was used as the triol for Example 6.

### Comparative Example 3 - HEUR from Triol with 26 EO units, n-Nonanol Capping Reagent

A mixture of CARBOWAX™ 8000 Polyethylene Glycol (200.0 g M_{w} = 8200), Poe(26) Glycerine (4.02 g), and toluene (400.0 g) was dried by azeotropic distillation for 2 h. The mixture was cooled to 90 °C, whereupon HDI (6.01 g) and bismuth octoate solution (0.21 g, 28% by weight) were added with stirring. After 1 h, *n*-nonanol (2.35 g) was added and the mixture was maintained at 80 °C for another 1 h. Toluene was removed *in vacuo* and the resulting solid polymer was isolated. After formulating in Pre-paint #1, KU was found to be 73; ICI was found to be 0.12 (1.20); and 100*ICI/KU was found to be 0.165 (1.65).

### Example 6 - HEUR from Triol with 200 EO units, n-Nonanol Capping Reagent

A mixture of CARBOWAX™ 8000 Polyethylene Glycol (120.0 g M_{w} = 8200), Poe(200) Glycerine (16.84 g), and toluene (400.0 g) was dried by azeotropic distillation for 2 h. The mixture was cooled to 90 °C, whereupon HDI (3.61 g) and bismuth octoate solution (0.16 g, 28% by weight) were added with stirring. After 1 h, *n*-nonanol (1.41 g) was added and the mixture was maintained at 80 °C for another 1 h. Toluene was removed *in vacuo* and the resulting solid polymer was isolated. After formulating in Pre-paint#1, KU was found to be 83; ICI was found to be 0.155 (1.55); and 100*ICI/KU was found to be 0.187 (1.87).

### Example 7 - Preparation of a HEUR with HDMI and n-Hexanol

A mixture of CARBOWAX™ 8000 Polyethylene Glycol (120.0 g M_{w} = 8200), Poe(200) Glycerine (16.84 g), and toluene (400.0 g) was dried by azeotropic distillation for 2 h. The mixture was cooled to 90 °C, whereupon 4,4'-methylenebis(isocyanatocyclohexane) (HDMI, 5.62 g) and bismuth octoate solution (0.16 g, 28% by weight) were added with stirring. After 1 h, *n*-hexanol (1.00 g) was added and the mixture was maintained at 80 °C for another 1 h. Toluene was removed *in vacuo* and the resulting solid polymer was isolated. After formulating in Pre-paint#1, KU was found to be 107; ICI was found to be 0.19 (1.90); and 100*ICI/KU was found to be 0.177 (1.77).

### Example 8 - Preparation of a HEUR with IPDI and n-Nonanol

The polymer was prepared essentially as described for Example 7 except that isophorone diisocyanate (IPDI, 4.77 g) was used as the diisocyanate and *n*-nonanol (1.41 g) was used as the capping reagent. After formulating in Pre-paint#1, KU was found to be 115; ICI was found to be 0.23 (2.30); and 100*ICI/KU was found to be 0.2 (2.00).

## Claims

1. A process comprising contacting together under reaction conditions: a) a polyalkylene glycol having a weight average molecular weight in the range of from 4000-12000 Daltons; an aliphatic diisocyanate; and an alkoxylated polyol having 50 to 250 repeating alkylene oxide units to form an intermediate polymer containing residual NCO groups; then b) reacting the intermediate polymer with a capping agent which is a linear, branched, or cyclic C₆-C₁₄ alkanol or C₁₀-C₁₆-(OX)ₙ-OH alkoxylated alcohol, where each X is independently CH₂CH₂ or CH₂CH(CH₃) and n is 1 to 50, to form a hydrophobically modified alkylene oxide urethane polymer; wherein the OH group mole equivalent ratio of the polyalkylene glycol to the alkoxylated polyol in step a) is in the range of 3:1 to 12:1; the NCO to OH mole equivalent ratio in step a) is in the range of 1:0.70 to 1:0.95; and the capping agent is added at or above a stoichiometric amount with respect to the residual NCO groups from step a); and wherein the alkoxylated polyol is an alkoxylated triol or tetraol or a combination thereof.

2. The process of Claim 1 wherein the polyalkylene glycol is a polyethylene glycol and the alkoxylated polyol is a polyoxyethylene triol.

3. The process of either of Claims 1 or 2 wherein the polyalkylene glycol is a polyethylene glycol having a weight average molecular weight in the range of from 5000-9000 Daltons and the alkoxylated polyol is a polyoxyethylene triol having 60 to 220 repeating ethylene oxide units.

4. The process of any of Claims 1 to 3 wherein alkoxylated polyol is a polyoxyethylene triol having 90 to 200 repeating ethylene oxide units and the NCO to OH group mole equivalent ratio in step a) is in the range of 1:0.80 to 1:0.90.

5. The process of any of Claims 1 to 4 wherein the OH group mole equivalent ratio of the polyalkylene glycol to the alkoxylated polyol is in the range of from 4:1 to 7:1; and the alkoxylated polyol is a polyoxyethylene triol having from 120 to 180 repeating ethylene oxide units.

6. The process of any of Claims 1 to 5 wherein the aliphatic diisocyanate is 1,6-hexamethylene diisocyanate, 4,4'-methylenebis(isocyanatocyclohexane), or isophorone diisocyanate or a combination thereof; and the capping agent is *n*-hexanol, *n*-nonanol, or *n*-decanol or a combination thereof.

7. A hydrophobically modified alkylene oxide urethane polymer comprising structural units of: a) a polyalkylene glycol having a weight average molecular weight in the range of from 4000-12000 Daltons; b) an aliphatic diisocyanate; c) an alkoxylated polyol having 50 to 250 repeating alkylene oxide units; and d) a capping agent which is a linear, branched, or cyclic C₆-C₁₄ alkanol or C₁₀-C₁₆-(OX)ₙ-OH alkoxylated alcohol, where each X is independently CH₂CH₂ or CH₂CH(CH₃) and n is 1 to 50; wherein the OH group mole equivalent ratio of structural units of the polyalkylene glycol to the alkoxylated polyol is in the range of 3:1 to 12:1; and the OH group mole equivalent of structural units of the capping agent to the alkoxylated polyol is in the range of 0.4 to 6.5, and wherein the alkoxylated polyol is an alkoxylated triol or tetraol.

8. The hydrophobically modified alkylene oxide urethane polymer of Claim 7 wherein the polyalkylene glycol is a polyethylene glycol having a weight average molecular weight in the range of from 5000-9000 Daltons; the alkoxylated polyol is an alkoxylated triol having from 60 to 220 repeating ethylene oxide units; and the capping agent is a linear, branched, or cyclic C₆-C₁₄ alkanol.

9. The hydrophobically modified alkylene oxide urethane polymer of either of Claims 7 or 8 wherein the OH group mole equivalent ratio of the structural units of the polyalkylene glycol to the alkoxylated polyol is in the range of from 4:1 to 7:1; and the alkoxylated polyol is an alkoxylated triol having from 90 to 200 repeating ethylene oxide units; and the OH group mole equivalent of structural units of the capping agent to the alkoxylated polyol is in the range of 0.6 to 2.0.

10. The hydrophobically modified alkylene oxide urethane polymer of any of Claims 7 to 9 wherein the alkoxylated polyol is an alkoxylated triol having from 120 to 180 repeating ethylene oxide units; the aliphatic diisocyanate is 1,6-hexamethylene diisocyanate, 4,4'-methylenebis(isocyanatocyclohexane), or isophorone diisocyanate or a combination thereof; and the capping agent is *n*-hexanol, *n*-nonanol, or *n-*decanol or a combination thereof.

11. An aqueous composition comprising the hydrophobically modified alkylene oxide urethane polymer of any of Claim 7-10, a latex binder, and titanium dioxide or encapsulated or partially encapsulated titanium dioxide.

## Patentansprüche

1. Ein Verfahren, beinhaltend das Miteinander-in-Kontakt-Bringen von Folgendem unter Reaktionsbedingungen: a) eines Polyalkylenglykols mit einem Gewichtsmittel der Molmasse in dem Bereich von 4000-12000 Dalton, eines aliphatischen Diisocyanats und eines alkoxylierten Polyols mit 50 bis 250 sich wiederholenden Alkylenoxideinheiten, um ein Zwischenpolymer zu bilden, das restliche NCO-Gruppen enthält; dann b) Reagierenlassen des Zwischenpolymers mit einem Kappungsmittel (Capping-Mittel), das ein lineares, verzweigtes oder zyklisches C₆-C₁₄-Alkanol oder ein alkoxylierter C₁₀-C₁₆-(OX)ₙ-OH-Alkohol ist, wobei jedes X unabhängig CH₂CH₂ oder CH₂CH(CH₃) ist und n 1 bis 50 ist,
zum Bilden eines hydrophob modifizierten Alkylenoxid-Urethan-Polymers; wobei das OH-Gruppen-Moläquivalentverhältnis des Polyalkylenglykols zu dem alkoxylierten Polyol in Schritt a) in dem Bereich von 3 : 1 bis 12 : 1 liegt, das NCO-zu-OH-Moläquivalentverhältnis in Schritt a) in dem Bereich von 1 : 0,70 bis 1 : 0,95 liegt und das Kappungsmittel in oder über einem stöchiometrischen Betrag in Bezug auf die restlichen NCO-Gruppen aus Schritt a) zugegeben wird; und wobei das alkoxylierte Polyol ein alkoxyliertes Triol oder Tetraol oder eine Kombination davon ist.

2. Verfahren gemäß Anspruch 1, wobei das Polyalkylenglykol ein Polyethylenglykol ist und das alkoxylierte Polyol ein Polyoxyethylentriol ist.

3. Verfahren gemäß einem der Ansprüche 1 oder 2, wobei das Polyalkylenglykol ein Polyethylenglykol ist, das ein Gewichtsmittel der Molmasse in dem Bereich von 5000-9000 Dalton aufweist, und das alkoxylierte Polyol ein Polyoxyethylentriol ist, das 60 bis 220 sich wiederholende Ethylenoxideinheiten aufweist.

4. Verfahren gemäß einem der Ansprüche 1 bis 3, wobei alkoxyliertes Polyol ein Polyoxyethylentriol ist, das 90 bis 200 sich wiederholende Ethylenoxideinheiten aufweist, und das NCO-zu-OH-Gruppen-Moläquivalentverhältnis in Schritt a) in dem Bereich von 1 : 0,80 bis 1 : 0,90 liegt.

5. Verfahren gemäß einem der Ansprüche 1 bis 4, wobei das OH-Gruppen-Moläquivalentverhältnis des Polyalkylenglykols zu dem alkoxylierten Polyol in dem Bereich von 4 : 1 bis 7 : 1 liegt und das alkoxylierte Polyol ein Polyoxyethylentriol ist, das von 120 bis 180 sich wiederholende Ethylenoxideinheiten aufweist.

6. Verfahren gemäß einem der Ansprüche 1 bis 5, wobei das aliphatische Diisocyanat 1,6-Hexamethylendiisocyanat, 4,4'-Methylenbis(isocyanatocyclohexan) oder Isophorondiisocyanat oder eine Kombination davon ist und das Kappungsmittel *n-*Hexanol, *n*-Nonanol oder *n*-Decanol oder eine Kombination davon ist.

7. Ein hydrophob modifiziertes Alkylenoxid-Urethan-Polymer, beinhaltend strukturelle Einheiten von: a) einem Polyalkylenglykol mit einem Gewichtsmittel der Molmasse in dem Bereich von 4000-12000 Dalton; b) einem aliphatischen Diisocyanat; c) einem alkoxylierten Polyol mit 50 bis 250 sich wiederholenden Alkylenoxideinheiten; und d) einem Kappungsmittel, das ein lineares, verzweigtes oder zyklisches C₆-C₁₄-Alkanol oder ein alkoxylierter C₁₀-C₁₆-(OX)ₙ-OH-Alkohol ist, wobei jedes X unabhängig CH₂CH₂ oder CH₂CH(CH₃) ist und n 1 bis 50 ist; wobei das OH-Gruppen-Moläquivalentverhältnis der strukturellen Einheiten des Polyalkylenglykols zu dem alkoxylierten Polyol in dem Bereich von 3 : 1 bis 12 : 1 liegt und das OH-Gruppen-Moläquivalent der strukturellen Einheiten des Kappungsmittels zu dem alkoxylierten Polyol in dem Bereich von 0,4 bis 6,5 liegt, und wobei das alkoxylierte Polyol ein alkoxyliertes Triol oder Tetraol ist.

8. Hydrophob modifiziertes Alkylenoxid-Urethan-Polymer gemäß Anspruch 7, wobei das Polyalkylenglykol ein Polyethylenglykol ist, das ein Gewichtsmittel der Molmasse in dem Bereich von 5000-9000 Dalton aufweist, das alkoxylierte Polyol ein alkoxyliertes Triol ist, das von 60 bis 220 sich wiederholende Ethylenoxideinheiten aufweist, und das Kappungsmittel ein lineares, verzweigtes oder zyklisches C₆-C₁₄-Alkanol ist.

9. Hydrophob modifiziertes Alkylenoxid-Urethan-Polymer gemäß einem der Ansprüche 7 oder 8, wobei das OH-Gruppen-Moläquivalentverhältnis der strukturellen Einheiten des Polyalkylenglykols zu dem alkoxylierten Polyol in dem Bereich von 4 : 1 bis 7 : 1 liegt und das alkoxylierte Polyol ein alkoxyliertes Triol ist, das von 90 bis 200 sich wiederholende Ethylenoxideinheiten aufweist, und das OH-Gruppen-Moläquivalent der strukturellen Einheiten des Kappungsmittels zu dem alkoxylierten Polyol in dem Bereich von 0,6 bis 2,0 liegt.

10. Hydrophob modifiziertes Alkylenoxid-Urethan-Polymer gemäß einem der Ansprüche 7 bis 9, wobei das alkoxylierte Polyol ein alkoxyliertes Triol ist, das von 120 bis 180 sich wiederholende Ethylenoxideinheiten aufweist, das aliphatische Diisocyanat 1,6-Hexamethylendiisocyanat, 4,4'-Methylenbis(isocyanatocyclohexan) oder Isophorondiisocyanat oder eine Kombination davon ist und das Kappungsmittel *n-*Hexanol, *n*-Nonanol oder *n*-Decanol oder eine Kombination davon ist.

11. Eine wässrige Zusammensetzung, die das hydrophob modifizierte Allkylenoxid-Urethan-Polymer gemäß einem der Ansprüche 7-10, ein Latexbindemittel und Titandioxid oder eingekapseltes oder teilweise eingekapseltes Titandioxid beinhaltet.

## Revendications

1. Un procédé comprenant le fait de mettre en contact les uns avec les autres dans des conditions de réaction : a) un polyalkylène glycol ayant une masse moléculaire moyenne en poids comprise dans la gamme allant de 4 000 à 12 000 Daltons ; un diisocyanate aliphatique ; et un polyol alcoxylé ayant de 50 à 250 motifs d'oxyde d'alkylène répétés pour former un polymère intermédiaire contenant des groupes NCO résiduels ; puis b) faire réagir le polymère intermédiaire avec un agent de coiffage qui est un alcanol en C₆-C₁₄ linéaire, ramifié ou cyclique ou un alcool alcoxylé C₁₀-C₁₆-(OX)ₙ-OH, où chaque X est indépendamment CH₂CH₂ ou CH₂CH(CH₃) et n est 1 à 50 pour former un polymère d'uréthane d'oxyde d'alkylène hydrophobiquement modifié ; dans lequel le rapport en équivalents molaires de groupes OH du polyalkylène glycol au polyol alcoxylé dans l'étape a) est compris dans la gamme allant de 3/1 à 12/1 ; le rapport en équivalents molaires de NCO à OH dans l'étape a) est compris dans la gamme allant de 1/0,70 à 1/0,95 ; et l'agent de coiffage est ajouté à ou au-dessus d'une quantité stoechiométrique par rapport aux groupes NCO résiduels de l'étape a) ; et dans lequel le polyol alcoxylé est un triol ou un tétraol alcoxylés ou une combinaison de ceux-ci.

2. Le procédé de la revendication 1 dans lequel le polyalkylène glycol est un polyéthylène glycol et le polyol alcoxylé est un polyoxyéthylène triol.

3. Le procédé de l'une ou l'autre des revendications 1 ou 2 dans lequel le polyalkylène glycol est un polyéthylène glycol ayant une masse moléculaire moyenne en poids comprise dans la gamme allant de 5 000 à 9 000 Daltons et le polyol alcoxylé est un polyoxyéthylène triol ayant de 60 à 220 motifs d'oxyde d'éthylène répétés.

4. Le procédé de n'importe lesquelles des revendications 1 à 3 dans lequel le polyol alcoxylé est un polyoxyéthylène triol ayant de 90 à 200 motifs d'oxyde d'éthylène répétés et le rapport en équivalents molaires de NCO au groupe OH dans l'étape a) est compris dans la gamme allant de 1/0,80 à 1/0,90.

5. Le procédé de n'importe lesquelles des revendications 1 à 4 dans lequel le rapport en équivalents molaires de groupes OH du polyalkylène glycol au polyol alcoxylé est compris dans la gamme allant de 4/1 à 7/1 ; et le polyol alcoxylé est un polyoxyéthylène triol ayant de 120 à 180 motifs d'oxyde d'éthylène répétés.

6. Le procédé de n'importe lesquelles des revendications 1 à 5 dans lequel le diisocyanate aliphatique est un diisocyanates de 1,6-hexaméthylène, un 4,4'-méthylènebis (isocyanatocyclohexane), ou un diisocyanate d'isophorone ou une combinaison de ceux-ci ; et l'agent de coiffage est un *n*-hexanol, un *n*-nonanol, ou un *n-*décanol ou une combinaison de ceux-ci.

7. Un polymère d'uréthane d'oxyde d'alkylène hydrophobiquement modifié comprenant des motifs structurels : a) d'un polyalkylène glycol ayant une masse moléculaire moyenne en poids comprise dans la gamme allant de 4 000 à 12 000 Daltons ; b) d'un diisocyanate aliphatique ; c) d'un polyol alcoxylé ayant de 50 à 250 motifs d'oxyde d'alkylène répétés ; et d) d'un agent de coiffage qui est un alcanol en C₆-C₁₄ linéaire, ramifié ou cyclique ou un alcool alcoxylé C₁₀-C₁₆-(OX)ₙ-OH, où chaque X est indépendamment CH₂CH₂ ou CH₂CH(CH₃) et n est 1 à 50 ; dans lequel le rapport en équivalents molaires de groupes OH de motifs structurels du polyalkylène glycol au polyol alcoxylé est compris dans la gamme allant de 3/1 à 12/1 ; et l'équivalent molaire de groupes OH de motifs structurels de l'agent de coiffage au polyol alcoxylé est compris dans la gamme allant de 0,4 à 6,5, et dans lequel le polyol alcoxylé est un triol ou un tétraol alcoxylés.

8. Le polymère d'uréthane d'oxyde d'alkylène hydrophobiquement modifié de la revendication 7 dans lequel le polyalkylène glycol est un polyéthylène glycol ayant une masse moléculaire moyenne en poids comprise dans la gamme allant de 5 000 à 9 000 Daltons ; le polyol alcoxylé est un triol alcoxylé ayant de 60 à 220 motifs d'oxyde d'éthylène répétés ; et l'agent de coiffage est un alcanol en C₆-C₁₄ linéaire, ramifié ou cyclique.

9. Le polymère d'uréthane d'oxyde d'alkylène hydrophobiquement modifié de l'une ou l'autre des revendications 7 ou 8 dans lequel le rapport en équivalents molaires de groupes OH des motifs structurels du polyalkylène glycol au polyol alcoxylé est compris dans la gamme allant de 4/1 à 7/1 ; et le polyol alcoxylé est un triol alcoxylé ayant de 90 à 200 motifs d'oxyde d'éthylène répétés ; et l'équivalent molaire de groupes OH de motifs structurels de l'agent de coiffage au polyol alcoxylé est compris dans la gamme allant de 0,6 à 2,0.

10. Le polymère d'uréthane d'oxyde d'alkylène hydrophobiquement modifié de n'importe lesquelles des revendications 7 à 9 dans lequel le polyol alcoxylé est un triol alcoxylé ayant de 120 à 180 motifs d'oxyde d'éthylène répétés ; le diisocyanate aliphatique est un diisocyanate de 1,6-hexaméthylène, un 4,4'-méthylènebis (isocyanatocyclohexane), ou un diisocyanate d'isophorone ou une combinaison de ceux-ci ; et l'agent de coiffage est un *n*-hexanol, un *n*-nonanol, ou un *n*-décanol ou une combinaison de ceux-ci.

11. Une composition aqueuse comprenant le polymère d'uréthane d'oxyde d'alkylène hydrophobiquement modifié de n'importe lesquelles des revendications 7 à 10, un liant de type latex, et un dioxyde de titane ou un dioxyde de titane encapsulé ou partiellement encapsulé.
